# EUROPÄISCHE PATENTSCHRIFT

(11) **EP 2 559 581 B1**
(45) Veröffentlichungstag und Bekanntmachung des Hinweises auf die Patenterteilung: **12.07.2017**
(21) Anmeldenummer: 12002720.6
(22) Anmeldetag: 19.04.2012
(51) Int. Cl.: B60K 17/14, B60K 17/356, B60T 1/06, B60T 7/12, B60T 8/172, B60T 8/175, B60T 8/1764, B60T 8/32, B60T 8/36, B60T 8/48, B60T 8/50, B60T 13/66, B60T 13/68, B60W 10/12, B60W 30/18, B60T 8/1755, F16H 48/20, F16H 48/18, B60W 10/184, B60K 7/00, F16H 39/40

(54) **Antriebssystem für ein Kraftfahrzeug mit einem als Sperrdifferential wirkenden Bremssystem**
Drive system for a motor vehicle with a brake system acting as limited slip differential
Système d'entraînement pour un véhicule automobile équipé d'un système de freinage agissant comme un différentiel à blocage

(30) Priorität: 18.08.2011 DE 102011111003
(43) Veröffentlichungstag der Anmeldung: 20.02.2013
(73) Patentinhaber: MAN Truck & Bus AG, 80995 München (DE)
(72) Erfinder: Resch, Franz-Georg, 82299 Türkenfeld (DE); Ittlinger, Reinhard, 94363 Oberschneiding (DE)
(74) Vertreter: v. Bezold & Partner Patentanwälte - PartG mbB

(56) Entgegenhaltungen:
- EP-A1- 0 131 505
- EP-A1- 2 009 329
- EP-A2- 1 886 861
- WO-A1-86/00580
- WO-A1-2005/047042
- DE-A1- 3 426 216
- DE-A1- 3 635 095
- DE-A1- 4 402 317
- DE-A1-102005 048 321
- GB-A- 2 221 516
- US-A1- 2010 307 843

## Beschreibung

Die Erfindung betrifft ein Antriebssystem für ein Kraftfahrzeug, vorzugsweise ein Nutzfahrzeug, wie z.B. einen Lastkraftwagen, einen Omnibus, einen Kleintransporter, ein Kraftfahrzeug mit mehr als 3,5 Tonnen Gesamtmasse und/oder ein Kraftfahrzeug mit mehr als 8 Sitzplätzen außer dem Fahrersitz.

Stand der Technik sind Nutzfahrzeuge, die zumindest zwei hydraulische Radmotoren zum Antreiben von zumindest zwei Rädern aufweisen. Die zumindest zwei Radmotoren sind in einen geschlossenen hydrostatischen Kreislauf integriert. Bei unterschiedlichen Untergrundverhältnissen mit stark abweichenden Reibfaktoren zwischen Rad und Untergrund kann es sein, dass ein Rad eine ausreichende Traktion aufweist, während ein anderes Rad eine stark verminderte Traktion aufweist oder die Traktion verliert. Ohne geeignete Gegenmaßnahmen wird der Ölstrom auf den Radmotor geleitet, der dem Rad mit verminderter oder verlorener Traktion zugeordnet ist. Da sich in diesem Fall kein oder zu wenig Druck an dem Radmotor aufbaut, der dem Rad mit ausreichender Traktion zugeordnet ist, ist z.B. ein Steckenbleiben oder allgemein ein beeinträchtigtes Anfahren des Nutzfahrzeugs möglich.

EP 0 131 505 A1 beschreibt ein Fahrzeug mit einem ABS-System, das zur Energierückgewinnung beim Abbremsen genutzt wird.

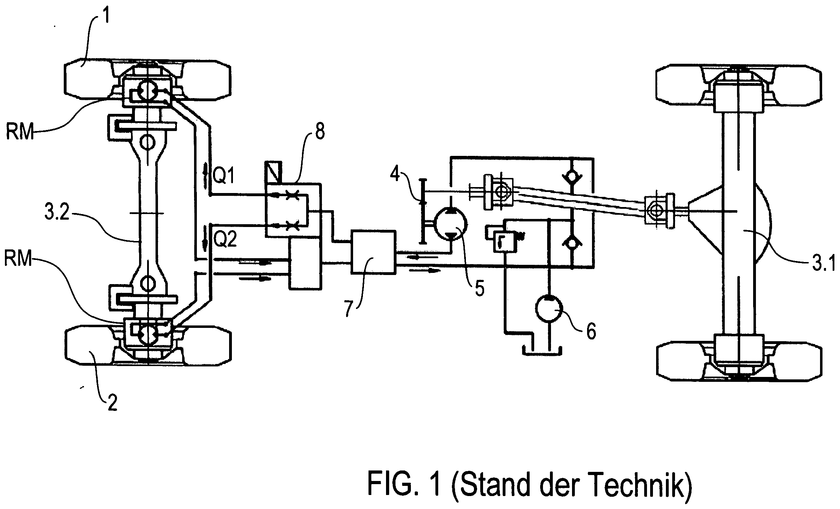

Figur 1 zeigt eine schematische Darstellung eines Antriebssystems gemäß Stand der Technik, wie es z.B. aus der Druckschrift EP 1 886 861 A2 bekannt ist. Das Antriebssystem umfasst eine Hinterachse 3.1 und zumindest zwei mittels hydraulischen Radmotoren RM antreibbare Vorderräder 1 und 2, die lenkbar an einer Vorderachse 3.2 angeordnet sind. Die zwei Radmotoren RM sind in einen geschlossenen hydrostatischen Kreislauf integriert. Dabei wird eine Hauptpumpe 5 mechanisch über den Triebstrang 4 des Fahrzeugs angetrieben. Durch ein Steuerventil 7 können die zwei Radmotoren RM zugeschaltet werden. Außerdem kann eine Speisepumpe 6 angeordnet sein, um auftretende externe Leckagemengen zu kompensieren. Im Hydraulikkreislauf ist für die zwei Räder 1 und 2 ein als hydraulisches Querdifferential wirkender, durch einen Steuerblock geregelter Druckölverteiler 8 angeordnet, der eine Aufteilung der Ölversorgung der Radmotoren RM in zweckmäßig gleichgroße Ölströme Q1 und Q2 bewirkt. Auf diese Weise wird eine hydraulisch wirkende Quersperre realisiert.

Eine Aufgabe der Erfindung ist es, ein alternatives und/oder verbessertes Antriebssystem für ein Kraftfahrzeug zu schaffen.

Diese Aufgabe kann insbesondere durch die Merkmale des Hauptanspruchs gelöst werden.

Erfindungsgemäß wird ein Antriebssystem für ein Kraftfahrzeug, insbesondere ein Nutzfahrzeug geschaffen. Bei dem Kraft-, insbesondere Nutzfahrzeug kann es sich z.B. um einen Kleintransporter, ein Kraftfahrzeug mit mehr als 3,5 Tonnen Gesamtmasse und/oder ein Kraftfahrzeug mit mehr als 8 Sitzplätzen außer dem Fahrersitz handeln.

Das Antriebssystem umfasst vorzugsweise mindestens eine erste Achse, die z.B. über einen Antriebsstrang antreibbar ist.

Außerdem kann das Antriebssystem mindestens eine zweite Achse umfassen, der mindestens ein vorzugsweise hydraulischer, insbesondere hydrostatischer Motor zugeordnet ist. Der mindestens eine Motor ist insbesondere zum Antreiben von zumindest zwei Rädern des Kraftfahrzeugs angeordnet.

Das Antriebssystem umfasst insbesondere ein Bremssystem, das als Sperrdifferential für die zumindest zwei Räder wirkt.

Vorteilhaft an dem erfindungsgemäßen Antriebssystem ist z.B., dass es ohne zusätzliche Hydraulikkomponenten auskommt, da die Sperrenfunktion stattdessen über das Bremssystem an den zumindest zwei, zweckmäßig hydrostatisch angetriebenen, Rädern erfolgt.

Es ist möglich, dass das Bremssystem mittels zumindest eines zweckmäßig steuer- oder regelbaren selektiven Bremseneingriffs als Sperrdifferential für die zumindest zwei Räder wirkt.

Das Antriebssystem umfasst vorzugsweise ein Meßsystem, mittels dem die Drehzahlen der mindestens zwei Räder ermittelbar sind. Die Drehzahlen werden z.B. genutzt, um aus den mindestens zwei Rädern ein Rad mit ausreichender Traktion und/oder einer Rad mit ganz oder teilweise verlorener Traktion zu identifizieren.

Es ist möglich, dass der Motor zum Antreiben der zumindest zwei Räder einen zweckmäßig hydraulischen (z.B. hydrostatischen) Achsmotor oder mindestens zwei zweckmäßig hydraulische (z.B. hydrostatische) Radmotoren umfasst. Somit ist es möglich, dass der zweiten Achse ein zweckmäßig hydraulischer Achsmotor zugeordnet ist oder mindestens zwei zweckmäßig hydraulische Radmotoren zugeordnet sind. Der Achsmotor oder die zumindest zwei Radmotoren sind zweckmäßig angeordnet zum Antreiben der zumindest zwei Räder. Vorzugsweise ist jeweils ein Radmotor jeweils zumindest einem der zumindest zwei Räder zugeordnet.

Beispielsweise kann ein ("zentraler") hydrostatischer Achsmotor so wirken, dass beim Bremsen das überschüssige Antriebsmoment für ein Rad mit ganz oder teilweise verlorener Traktion auf ein Rad mit ausreichender Traktion übertragen wird.

Die Radmotoren sind vorzugsweise als Einzelradmotoren ausgeführt.

Das Bremssystem ist vorzugsweise so konfiguriert, dass es einen Bremseneingriff in Abhängigkeit der ermittelten Drehzahlen der zumindest zwei Räder ausführt. Vorzugsweise ist das Bremssystem so konfiguriert, dass es einen Bremseneingriff ausführt, wenn aus den mindestens zwei Rädern ein Rad mit ganz oder teilweise verlorener Traktion identifiziert wird und vorzugsweise der mindestens eine Motor zum Antreiben der zumindest zwei Räder zugeschaltet (z.B. aktiviert) ist.

Das Bremssystem ist so konfiguriert, dass es einen Bremseneingriff für das Rad mit ganz oder teilweise verlorener Traktion ausführt und vorzugsweise keinen Bremseneingriff für das Rad mit ausreichender Traktion ausführt.

Es ist möglich, dass der mindestens eine Motor zum Antreiben der zumindest zwei Räder in einen vorzugsweise geschlossenen hydrostatischen Kreislauf integriert ist.

So ist es z.B. möglich, dass durch den zumindest einen Bremseneingriff der hydraulische Druck für den hydraulischen Achsmotor erhöht wird, wodurch vorteilhaft ein Rad mit ausreichender Traktion mit erhöhter Antriebsleistung beaufschlagt wird. Ebenso ist es möglich, dass durch den zumindest einen Bremseneingriff der hydraulische Druck für einen hydraulischen Radmotor, der einem Rad mit ausreichender Traktion zugeordnet ist, erhöht wird, wodurch vorteilhaft das Rad mit ausreichender Traktion mit erhöhter Antriebsleistung beaufschlagt wird. Es versteht sich, dass zweckmäßig während eines Bremseneingriffs ein Rad mit verminderter oder verlorener Traktion mit entsprechend weniger oder gar keiner Antriebsleistung versorgt wird.

Es ist möglich, dass eine Hauptpumpe (z.B. ausgeführt als Konstantpumpe oder Verstellpumpe) in den Kreislauf integriert ist, die z.B. mechanisch über den Antriebsstrang des Kraftfahrzeugs angetrieben werden kann. Der Antrieb des Kreislaufes kann z.B. über einen Abgriff mechanischer Leistung direkt an einer Antriebsmaschine des Kraftfahrzeugs (z.B. einem Verbrennungsmotor, Elektro-Motor, etc.) erfolgen oder durch einen Abgriff mechanischer Leistung am Triebstrang des Kraftfahrzeugs (z.B. Getriebe, Gelenkwelle, geeignete Achse, etc.). Außerdem kann eine weitere Pumpe (z.B. ausgeführt als Speisepumpe) in den Kreislauf integriert werden, z.B. um auftretende externe Leckagemengen (z.B. zur Lagerschmierung) zu kompensieren.

Es ist möglich, dass das Bremssystem das zweckmäßig zum Abbremsen des Fahrzeugs genutzte Fahrzeugsbremssystem ist oder umfasst. Vorzugsweise kann somit ein (vorteilhaft ohnehin vorhandenes) Fahrzeugbremssystem als Sperrdifferential für die zumindest zwei Räder wirken.

Es ist aber auch möglich, dass das Bremssystem zusätzlich zu einem zweckmäßig zum Abbremsen des Fahrzeugs genutzten Fahrzeugbremssystem angeordnet ist und insbesondere unabhängig von dem Fahrzeugbremssystem betreibbar ist.

Das Bremssystem umfasst vorzugsweise zwei hydraulische oder druckluftbetätigte Bremseinrichtungen. Vorzugsweise ist jeweils eine Bremseinrichtung jeweils zumindest einem der zumindest zwei Räder zugeordnet. Die Bremseinrichtungen sind vorzugsweise als Trommel- oder Scheibenbremse ausgeführt und/oder mechanisch fest mit einer Radnabe bzw. einem Radmotor verbunden.

Vorzugsweise ist die erste Achse eine Hinterachse und/oder die zweite Achse eine Vorderachse.

Zweckmäßig sind die zumindest zwei Räder Vorderräder (z.B. ein linksseitiges und ein rechtsseitiges) und/oder an der zweiten Achse angeordnet, insbesondere angebracht, z.B. eines an dem einen Ende der zweiten Achse (z.B. links) und eines an dem anderen Ende der zweiten Achse (z.B. rechts).

Vorzugsweise sind die zumindest zwei Räder und/oder die zweite Achse lenkbar.

Die zumindest zwei Räder sind insbesondere mittels des Achsmotors oder den zumindest zwei Radmotoren (vorzugsweise hydraulisch bzw. hydrostatisch) antreibbare Räder. Vorzugsweise ist jeweils ein Radmotor jeweils zumindest einem der zumindest zwei Räder zugeordnet.

Es ist möglich, dass das Sperrdifferential ein Querdifferential ist. Es ist aber auch möglich, dass das Sperrdifferential ein Längsdifferential ist, z.B. mit einem Verteilergetriebe zwischen Hinter- und Vorderachse. Außerdem kann das Sperrdifferential ein Zentral-und/oder Längsdifferential sein.

Vorzugsweise ist der mindestens eine Motor zum Antreiben der zumindest zwei Räder, insbesondere der Achsmotor oder die mindestens zwei Radmotoren, wahlweise zuschaltbar (z.B. aktivierbar und/oder deaktivierbar).

Zu erwähnen ist, dass das erfindungsgemäße Antriebssystem insbesondere bei dem unter dem Namen MAN HydroDrive® bekannten System einsetzbar ist.

Bei der Ausführungsform mit dem Achsmotor kann eine starre, durchgehende Welle z.B. ersetzt werden durch eine Welle mit Freilauf oder anderer Entkopplung.

Die Erfindung umfasst auch ein Kraftfahrzeug, insbesondere Nutzfahrzeug (z.B. Lastkraftwagen, Omnibus, etc.), das ein wie hierin beschriebenes Antriebssystem aufweist.

Obige erfindungsgemäßen Merkmale und Ausführungsformen sind beliebig miteinander kombinierbar. Andere vorteilhafte Weiterbildungen der Erfindung sind in den Unteransprüchen offenbart oder ergeben sich aus der nachstehenden Beschreibung bevorzugter Ausführungsbeispiele der Erfindung in Verbindung mit den beigefügten Figuren.
- Figur 1: zeigt eine schematische Darstellung eines Antriebssystems für ein Kraftfahrzeug gemäß Stand der Technik mit hydraulisch angetriebenen Radmotoren,
- Figur 2: zeigt eine schematische Seitenansicht eines Kraftfahrzeugs gemäß einer Ausführungsform der Erfindung,
- Figur 3: zeigt eine Vorderansicht des Kraftfahrzeugs der Figur 2, und
- Figur 4: zeigt eine schematische Darstellung eines Antriebssystems für ein Kraftfahrzeug gemäß einer Ausführungsform der Erfindung.

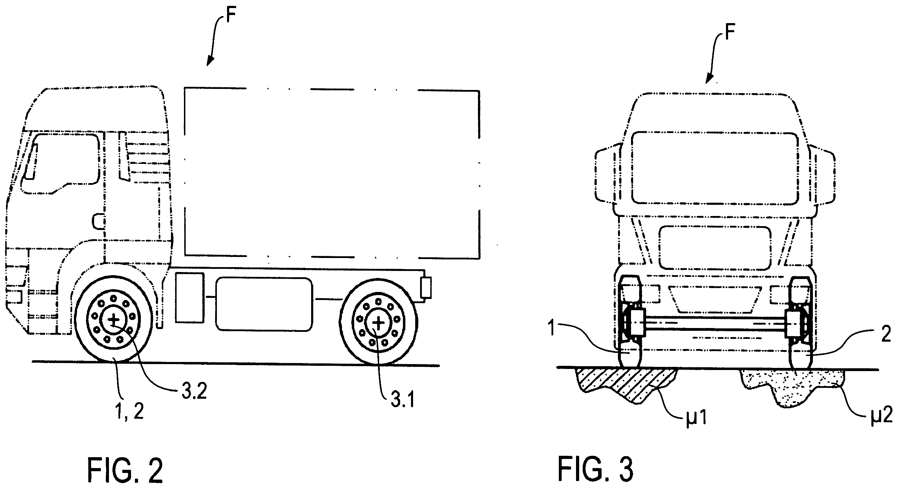

Die in den Figuren gezeigten Ausführungsformen, die gemäß Figur 1 den Stand der Technik und gemäß den Figuren 2 bis 4 die Erfindung betreffen, stimmen teilweise überein, wobei ähnliche oder identische Teile mit den gleichen Bezugszeichen versehen sind, und zu deren Erläuterung auch auf die Beschreibung einer oder mehrerer anderer Ausführungsformen verwiesen wird, um Wiederholungen zu vermeiden.

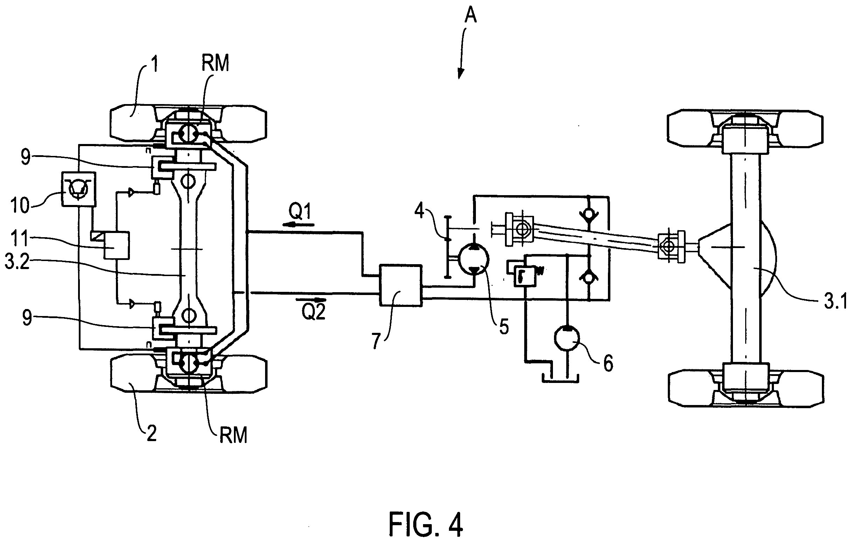

Figur 2 zeigt eine schematische Seitenansicht eines Nutzfahrzeugs F und Figur 3 zeigt eine schematische Vorderansicht des Nutzfahrzeugs F gemäß einer Ausführungsform der Erfindung. Das Nutzfahrzeug F ist als Lastkraftwagen ausgeführt und umfasst einer Hinterachse 3.1 und zwei an einer Vorderachse 3.2 angeordnete lenkbare Räder 1 und 2, die von jeweils einem Radmotor RM (siehe Figur 4) antreibbar sind. Das Rad R1 steht auf einem Untergrund mit hohem Reibfaktor µ1 und weist eine ausreichende Traktion ("feststehend") auf. Das Rad R2 steht auf einem Untergrund mit niedrigem Reibfaktor µ2 und weist keine oder eine zu geringe Traktion ("freidrehend") auf.

Figur 4 zeigt eine schematische Darstellung eines Antriebssystems A gemäß einer Ausführungsform der Erfindung, z.B. für das in den Figuren 2 und 3 gezeigte Nutzfahrzeug F.

Das Antriebssystem A umfasst eine über einen Antriebsstrang 4 antreibbare Hinterachse 3.1 und eine Vorderachse 3.2, der zwei hydraulische Radmotoren RM zugeordnet sind (oder ein nicht gezeigter hydraulischer Achsmotor), um zwei Räder 1 und 2 anzutreiben. Außerdem umfasst das Antriebssystem A ein Bremssystem, das mittels zumindest eines selektiven Bremseneingriffs als Sperr-/Querdifferential für die zwei Räder 1 und 2 wirkt.

Dadurch kann die Antriebsleistung für ein Rad 2 mit keiner oder zu geringer Traktion reduziert und die Antriebsleistung für das Rad 1 mit ausreichender Traktion entsprechend erhöht werden.

Das Antriebssystem A umfasst ein Meßsystem 10, mittels dem die Drehzahlen der zwei Räder 1 und 2 ermittelbar sind, um aus den zwei Rädern 1 und 2 ein Rad 1 mit ausreichender Traktion und ein Rad 2 mit ganz oder teilweise verlorener Traktion identifizieren zu können. Außerdem ist eine Regel- oder Steuereinrichtung 11 angeordnet, die mit dem Meßsystem 10 verbunden ist und ausgebildet ist, um das Bremssystem oder allgemein einen selektiven Bremseneingriff in Abhängigkeit der erfassten Drehzahlen zu steuern oder zu regeln.

Das Antriebssystem A umfasst einen geschlossenen hydrostatischen Kreislauf, in den die vorzugsweise als Einzelradmotoren ausgeführten Radmotoren RM integriert sind. Außerdem ist in den Kreislauf eine Hauptpumpe 5 integriert, die z.B. mechanisch über den Antriebsstrang 4 des Nutzfahrzeugs F angetrieben werden kann. Der Antrieb des Kreislaufs kann z.B. über einen Abgriff mechanischer Leistung direkt an einer Antriebsmaschine des Nutzfahrzeugs F (z.B. einem Verbrennungsmotor, Elektro-Motor, etc.) erfolgen oder durch einen Abgriff mechanischer Leistung am Antriebsstrang 4 des Nutzfahrzeugs F (z.B. Getriebe, Gelenkwelle, geeignete Achse, etc.). Außerdem ist eine Speisepumpe 6 in den Kreislauf integriert, z.B. um auftretende externe Leckagemengen (z.B. zur Lagerschmierung) zu kompensieren.

Wird ein selektiver Bremseneingriff durch das als Sperrdifferential wirkende Bremssystem ausgeführt, wird der hydraulische Druck für den Radmotor RM, der dem Rad 1 mit ausreichender Traktion zugeordnet ist, erhöht, wodurch das Rad R1 mit ausreichender Traktion mit erhöhter Antriebsleistung versorgt wird. Entsprechend wird der Radmotor RM, der dem Rad R2 mit keiner oder zu geringer Traktion zugeordnet ist, mit keiner oder reduzierter Antriebsleistung versorgt.

Es wird ersichtlich, dass das Antriebssystem A mit Ausnahme der Sperrdifferentialrealisierung identisch zu dem in der EP 1 886 861 A2 beschriebenen Antriebssystem ausgeführt werden kann. Insbesondere kann der in Figur 1 dargestellte Druckölverteiler (Mengenteiler) 8, der als Sperrdifferential für die zwei Räder 1 und 2 wirkt, entfallen und durch ein als Sperrdifferential wirkendes Bremssystem ersetzt werden.

Die Erfindung ist nicht auf die vorstehend beschriebenen bevorzugten Ausführungsformen beschränkt. Vielmehr ist eine Vielzahl von Varianten und Abwandlungen möglich, die ebenfalls von dem Erfindungsgedanken Gebrauch machen und deshalb in den Schutzbereich fallen. Die Erfindung beansprucht auch Schutz für den Gegenstand der einzelnen Unteransprüche unabhängig von dem Gegenstand der in Bezug genommenen Ansprüche.

## Patentansprüche

1. Antriebssystem (A) für ein Kraftfahrzeug, insbesondere Nutzfahrzeug, mit:
- mindestens einer ersten Achse (3.1), die über einen Antriebsstrang (4) antreibbar ist,
- mindestens einer zweiten Achse (3.2), der mindestens ein vorzugsweise hydraulischer Motor zum Antreiben von zumindest zwei Rädern (1, 2) des Kraftfahrzeugs zugeordnet ist, **gekennzeichnet durch**
- ein Bremssystem (9, 11), das als Sperrdifferential für die zumindest zwei Räder (1, 2) wirkt und so konfiguriert ist, dass es einen Bremseneingriff für ein Rad mit ganz oder teilweise verlorener Traktion ausführt.

2. Antriebssystem (A) nach Anspruch 1, wobei das Bremssystem (9, 11) mittels eines oder mehrerer selektiver Bremseneingriffe als Sperrdifferential für die zumindest zwei Räder (1, 2) wirkt.

3. Antriebssystem (A) nach Anspruch 1 oder 2, mit einem Meßsystem (10), mittels dem die Drehzahlen der mindestens zwei Räder (1, 2) erfassbar sind, um aus den mindestens zwei Rädern (1, 2) ein Rad mit ausreichender Traktion und ein Rad mit ganz oder teilweise verlorener Traktion zu identifizieren.

4. Antriebssystem (A) nach einem der vorhergehenden Ansprüche, wobei das Bremssystem (9, 11) so konfiguriert ist, dass es einen Bremseneingriff in Abhängigkeit der ermittelten Drehzahlen ausführt, insbesondere wenn aus den mindestens zwei Rädern (1, 2) ein Rad mit ganz oder teilweise verlorener Traktion identifiziert wird und vorzugsweise der mindestens eine Motor zum Antreiben der zumindest zwei Räder (1, 2) zugeschaltet ist.

5. Antriebssystem (A) nach einem der vorhergehenden Ansprüche, wobei das Bremssystem (9, 11) so konfiguriert ist, dass es einen Bremseneingriff für ein Rad mit ganz oder teilweise verlorener Traktion ausführt, während es auf ein Rad mit ausreichender Traktion keinen Bremseneingriff ausübt.

6. Antriebssystem (A) nach einem der vorhergehenden Ansprüche, wobei der zumindest eine Motor zum Antreiben der zumindest zwei Räder (1, 2) einen hydraulischen Achsmotor oder mindestens zwei hydraulische Radmotoren (RM) umfasst.

7. Antriebssystem (A) nach Anspruch 6, wobei durch einen selektiven Bremseneingriff der hydraulische Druck für den hydraulischen Achsmotor oder für den hydraulischen Radmotor (RM), der einem Rad mit ausreichender Traktion zugeordnet ist, erhöht wird, so dass das Rad mit ausreichender Traktion mit erhöhter Antriebsleistung versorgbar ist.

8. Antriebssystem (A) nach einem der vorhergehenden Ansprüche, wobei das Bremssystem zwei hydraulische oder druckluftbetätigte Bremseinrichtungen (9) umfasst, wobei jeweils eine Bremseinrichtung (9) jeweils zumindest einem der zumindest zwei Räder (1, 2) zugeordnet ist.

9. Antriebssystem (A) nach einem der vorhergehenden Ansprüche, wobei die erste Achse (3.1) eine Hinterachse ist, die zweite Achse (3.2) ein Vorderachse ist und die zumindest zwei Räder (1, 2) lenkbare Vorderräder sind.

10. Antriebssystem (A) nach einem der vorhergehenden Ansprüche, wobei das Sperrdifferential zumindest eines von Folgenden umfasst:
- ein Querdifferential,
- ein Längsdifferential,
- ein Achsdifferential,
- ein Mittendifferential.

11. Antriebssystem (A) nach einem der vorhergehenden Ansprüche, wobei
- das Bremssystem das zum Abbremsen des Fahrzeugs genutzte Fahrzeugbremssystem ist oder umfasst, oder
- das Bremssystem zusätzlich zu dem zum Abbremsen des Fahrzeugs genutzten Fahrzeugbremssystem angeordnet ist.

12. Antriebssystem (A) nach einem der vorhergehenden Ansprüche, wobei der Motor zum Antreiben der zumindest zwei Räder (1, 2) wahlweise zuschaltbar ist.

13. Kraftfahrzeug, mit einem Antriebssystem (A) nach einem der vorhergehenden Ansprüche.

## Claims

1. A drive system (A) for a motor vehicle, in particular utility vehicle, having:
- at least one first axle (3.1) which can be driven via a drivetrain (4),
- at least one second axle (3.2) which is assigned at least one preferably hydraulic motor for driving at least two wheels (1, 2) of the motor vehicle, **characterized by**
- a brake system (9, 11) which acts as a locking differential for the at least two wheels (1, 2) and which is configured so as to perform a braking intervention for a wheel that has entirely or partially lost traction.

2. The drive system (A) according to Claim 1, wherein the brake system (9, 11) acts as a locking differential for the at least two wheels (1, 2) by way of one or several selective braking interventions.

3. The drive system (A) according to Claim 1 or 2, having a measurement system (10) by means of which the rotational speeds of the at least two wheels (1, 2) can be detected in order, out of the at least two wheels (1, 2), to identify a wheel with sufficient traction and a wheel that has entirely or partially lost traction.

4. The drive system (A) according to one of the preceding claims, wherein the brake system (9, 11) is configured so as to perform a braking intervention in a manner dependent on the determined rotational speeds, in particular if, out of the at least two wheels (1, 2), a wheel that has entirely or partially lost traction is identified, and preferably, the at least one motor for driving the at least two wheels (1, 2) is activated.

5. The drive system (A) according to one of the preceding claims, wherein the brake system (9, 11) is configured so as to perform a braking intervention for a wheel that has entirely or partially lost traction, whereas said brake system does not perform a braking intervention on a wheel with sufficient traction.

6. The drive system (A) according to one of the preceding claims, wherein the at least one motor for driving the at least two wheels (1, 2) comprises a hydraulic axle motor or at least two hydraulic wheel motors (RM).

7. The drive system (A) according to Claim 6, wherein, by means of a selective braking intervention, the hydraulic pressure for the hydraulic axle motor or for that hydraulic wheel motor (RM) which is assigned to a wheel with sufficient traction is increased, such that the wheel with sufficient traction can be supplied with increased drive power.

8. The drive system (A) according to one of the preceding claims, wherein the brake system comprises two hydraulic or compressed-air-actuated brake devices (9), wherein in each case one brake device (9) is assigned to in each case at least one of the at least two wheels (1, 2).

9. The drive system (A) according to one of the preceding claims, wherein the first axle (3.1) is a rear axle, the second axle (3.2) is a front axle, and the at least two wheels (1, 2) are steerable front wheels.

10. The drive system (A) according to one of the preceding claims, wherein the locking differential comprises at least one of the following:
- a transverse differential,
- a longitudinal differential,
- an axle differential,
- a central differential.

11. The drive system (A) according to one of the preceding claims, wherein
- the brake system is or comprises the vehicle brake system that is utilized for the braking of the vehicle, or
- the brake system is provided in addition to the vehicle brake system that is utilized for the braking of the vehicle.

12. The drive system (A) according to one of the preceding claims, wherein the motor for driving the at least two wheels (1, 2) is selectively activatable.

13. A motor vehicle having a drive system (A) according to one of the preceding claims.

## Revendications

1. Un système d'entraînement (A) pour un véhicule automobile, en particulier un véhicule utilitaire, comprenant :
- au moins un premier essieu (3.1) qui peut être entraîné par le biais d'une chaîne cinématique (4),
- au moins un deuxième essieu (3.2), auquel est associé au moins un moteur de préférence hydraulique pour l'entraînement d'au moins deux roues (1, 2) du véhicule automobile, **caractérisé par**
- un système de freinage (9, 11) qui agit en tant que différentiel de blocage pour les au moins deux roues (1, 2) et qui est configuré de manière à réaliser un engagement des freins pour une roue dont la traction est complètement ou partiellement perdue.

2. Le système d'entraînement (A) selon la revendication 1, dans lequel le système de freinage (9, 11) agit au moyen d'un ou plusieurs engagements sélectifs des freins en tant que différentiel de blocage pour les au moins deux roues (1, 2).

3. Le système d'entraînement (A) selon la revendication 1 ou 2, comprenant un système de mesure (10) au moyen duquel les vitesses de rotation des au moins deux roues (1, 2) peuvent être détectées, afin d'identifier à partir des au moins deux roues (1, 2) une roue ayant une traction suffisante et une roue dont la traction est complètement ou partiellement perdue.

4. Le système d'entraînement (A) selon l'une quelconque des revendications précédentes, dans lequel le système de freinage (9, 11) est configuré de manière à réaliser un engagement des freins en fonction des vitesses de rotation détectées, en particulier si l'on identifie à partir des au moins deux roues (1, 2), une roue dont la traction est complètement ou partiellement perdue et de préférence l'au moins un moteur pour l'entraînement des au moins deux roues (1, 2) est démarré.

5. Le système d'entraînement (A) selon l'une quelconque des revendications précédentes, dans lequel le système de freinage (9, 11) est configuré de manière à réaliser un engagement des freins pour une roue dont la traction est complètement ou partiellement perdue, tandis qu'il n'exerce aucun engagement des freins sur une roue ayant une traction suffisante.

6. Le système d'entraînement (A) selon l'une quelconque des revendications précédentes, dans lequel l'au moins un moteur pour l'entraînement des au moins deux roues (1, 2) comprend un moteur d'axe hydraulique ou au moins deux moteurs de roues hydrauliques (RM).

7. Le système d'entraînement (A) selon la revendication 6, dans lequel, par un engagement sélectif des freins, la pression hydraulique pour le moteur d'axe hydraulique ou pour le moteur de roues hydraulique (RM) auquel est associée une roue ayant une traction suffisante, est augmentée de telle sorte que la roue ayant une traction suffisante puisse être alimentée avec une puissance d'entraînement accrue.

8. Le système d'entraînement (A) selon l'une quelconque des revendications précédentes, dans lequel le système de freinage comprend deux dispositifs de freinage hydrauliques ou à commande à air comprimé (9), un dispositif de freinage (9) étant à chaque fois associé à au moins l'une des au moins deux roues (1, 2).

9. Le système d'entraînement (A) selon l'une quelconque des revendications précédentes, dans lequel le premier essieu (3.1) est un essieu arrière, le deuxième essieu (3.2) est un essieu avant et les au moins deux roues (1, 2) sont des roues avant dirigeables.

10. Le système d'entraînement (A) selon l'une quelconque des revendications précédentes, dans lequel le différentiel de blocage comprend au moins l'un des éléments suivants :
- un différentiel de pont,
- un différentiel intermédiaire,
- un différentiel d'essieu,
- un différentiel central.

11. Le système d'entraînement (A) selon l'une quelconque des revendications précédentes, dans lequel
- le système de freinage est ou comprend le système de freinage du véhicule utilisé pour freiner le véhicule, ou
- le système de freinage est prévu en plus du système de freinage du véhicule utilisé pour freiner le véhicule.

12. Le système d'entraînement (A) selon l'une quelconque des revendications précédentes, dans lequel le moteur pour l'entraînement des au moins deux roues (1, 2) peut être démarré de manière sélective.

13. Un véhicule automobile, comprenant un système d'entraînement (A) selon l'une quelconque des revendications précédentes.
